Europäisches Patentamt

European Patent Office

Office européen des brevets

(19)

(11) **EP 1 432 196 A1**

(12) **EUROPEAN PATENT APPLICATION**

(43) Date of publication:
    **23.06.2004 Bulletin 2004/26**

(51) Int Cl.$^7$: **H04L 29/06**

(21) Application number: **02028632.4**

(22) Date of filing: **20.12.2002**

(84) Designated Contracting States:
    **AT BE BG CH CY CZ DE DK EE ES FI FR GB GR
    IE IT LI LU MC NL PT SE SI SK TR**
    Designated Extension States:
    **AL LT LV MK RO**

(71) Applicant: **MATSUSHITA ELECTRIC INDUSTRIAL
    CO., LTD.
    Kadoma-city, Osaka 571-8501 (JP)**

(72) Inventors:
 • **Gu, Xiaoyuan
   64295 Darmstadt (DE)**

 • **Hakenberg, Rolf
   64295 Darmstadt (DE)**
 • **Miyazaki, Akihiro
   Sakai-city, Osaka 591-8032 (JP)**

(74) Representative: **Grünecker, Kinkeldey,
    Stockmair & Schwanhäusser Anwaltssozietät
    Maximilianstrasse 58
    80538 München (DE)**

(54) **Control traffic compression method in media data transmission**

(57)    The present invention is related to method for the compression of a control traffic in media data transmission, which uses Real-time Transport Protocol (RTP) and Real-time Control Protocol (RTCP), employed particularly in real-time or near-real-time multimedia data delivery in an Internet protocol (IP) network, within the allocated fractions of the available session bandwidth. To optimise the bandwidth efficiency for RTCP traffic and the to reduce the RTCP report/feedback interval the present invention provides a method comprising the steps of initialising the context of control traffic flow by initially transmitting context parameters and updating said context during the session if necessary using compressed control packets.

```
  0   1   2   3   4   5   6   7
+---+---+---+---+---+---+---+---+
| 1   1   1 |       RC          |
+---+---+---+---+---+---+---+---+
| S |           CRC             |
+---+---+---+---+---+---+---+---+
| P | LSB Scaled RTP Timestamp  |
+---+---+---+---+---+---+---+---+
| X | LSB Sender's Packet Count |
+---+---+---+---+---+---+---+---+
| LSB Sender Octet Count Part1  |
+---+---+---+---+---+---+---+---+
| LSB SOC P2        |LSB Len SR |
+=+=+=+=+=+=+=+=+=+=+=+=+=+=+=+=+
| fraction lost                 |
+---+---+---+---+---+---+---+---+
| LSB cumu.loss |LSB SN Cycle   |
+---+---+---+---+---+---+---+---+
| LSB Highest SN|intera. jitter |
+---+---+---+---+---+---+---+---+
| LSB TS last SR|LSB  DLS       |
+=+=+=+=+=+=+=+=+=+=+=+=+=+=+=+=+
:         ...                   :
+=+=+=+=+=+=+=+=+=+=+=+=+=+=+=+=+
| profile-specific extensions   |
+-+-+-+-+-+-+-+-+-+-+-+-+-+-+-+-+
```

**Figure 3**

EP 1 432 196 A1

**Description**

The present invention is related to a compression method for RTCP traffic in media data transmission sessions. In particular, the method is intended to be employed in real-time or near real-time data packet transmission in an Internet Protocol (IP) network using a real-time protocol (RTP) for media data delivery and Real-time Control Protocol (RTCP) for controlling media delivery. Each of the protocols, RTP or RTCP, is allocated a fraction of the available session bandwidth according to the specifications given in RFC 1889.

The Real-time Transport Protocol (RTP), as defined in RFC 1889, is the de-facto standard that provides end to end network transport functions suitable for applications transmitting real-time data over multicast or unicast network services. It is augmented by the Real-time Control Protocol (RTCP) to allow monitoring the Quality of Service (QoS) of data delivery in a manner scalable to large multicast networks and to provide minimal control and identification functionality. RTP does not address resource reservation and does not guarantee Quality of Service (QoS) for real-time services.

RTP restricts the control traffic using two rules: First, it is recommended that 5% of the session bandwidth is allocated to RTCP traffic and it is shared by all participants in a session. Second, the minimum report interval for the transmission of feedback is recommended to be five seconds. All receivers in a session are using their own fraction with this 5% to calculate their report interval. The RTCP report interval T defines the time interval between two RTCP data packets from a source that has to be met. This interval depends to a large extent on the average RTCP packet size.

While these rules make RTP stable and usable for large multicast groups it is not optimal for unicast or small multicast scenarios. For the latter, more feedback per user would be beneficial and most likely possible. The problem was already identified and a new RTP profile RTP-AVPF is being standardised by the IETF's Audio Video Transport Working Group. With the new profile the recommended minimum feedback interval of five seconds is not applied. Therefore the receiver can send some early RTCP packets as feedback for packet losses, depending on the current session parameters.

IP based real-time multimedia application introduce a large Layer-3, Layer-4 and upper layer header overhead due to usually small payload sizes of single packets in a real-time data flow. Because of the restricted bandwidth of wireless links, header compression represents an essential prerequisite for the mobile Internet, i.e., whenever an IP based mobile end device has to communicate with an IP based infrastructure. Robust Header Compression (ROHC) as defined in RFC 3095 is the state-of-the-art header compression scheme standardised by the IETF. It provides a complex framework that allows to fine tune compression efficiency versus robustness against link errors based on different link conditions. The protocol works by maintaining states at both end points of the first hop or last hop wireless link and by removing the redundancy of the packet headers and by encoding the information in an efficient way. The states of the compressor at the transmitting end (or endpoint) and the decompressor at the receiving end are also referred to as "context". The context contains relevant information from previous headers in the packet stream, such as static fields and possible reference values for compression and decompression. Additional information describing the packet stream may be also part of the context, for example information about how the IP Identifier field changes and the typical inter-packet increase in sequence numbers or timestamps.

Although in RFC 3095 there are four profiles for No Compression, RTP/UDP/IP, UDP/IP, and ESP, as well as one draft profile for IP only, there is no specification on how RTCP packets and headers can be handled using compression.

Video streaming over the mobile Internet as one of the key applications using RTP/RTCP is gaining the momentum. However, the lossy behaviour and long round trip time in wireless links makes the deployment of this kind of applications challenging enough. One reason are inter-frame video compression algorithms like MPEG-4 exploiting temporal correlations between the frame to achieve extremely high compression gain, but they also suffer from the well-known propagation of errors effect, since errors of a reference frame propagate to all the dependent different frames.

The object of the present invention is to optimise the bandwidth efficiency for RTCP traffic and the to reduce the RTCP report/feedback interval. The shared session bandwidth fraction for RTCP among all participants in a session and for bi-directional operation is limited. Spectrum efficiency is vital in sparse and expensive wireless links. Therefore how to use this limited bandwidth efficiently represents a need for applications deploy RTP via wireless links. The presented method aims at maximum exploiting bandwidth efficiency for RTCP traffic for these usages without exceeding the available RTCP bandwidth fraction. The RTCP report interval is the period between two consecutive reports from the same receiver for within the same session. It is affected by latency from two aspects. RTCP report latency is the period between a packet loss is detected at the receiver and a report/feedback is sent, and the latency due the round-trip-time (RTT) of the link. While the latter is hard to avoid, the report latency can be exploited for optimisation. The formula for the calculation of this latency, which is defined as the report interval T, can be expressed as:

$$T = avg\_rtcp\_size * n / rtcp\_bw$$

For a typical scenario in which RTP/RTCP is used in unicast and small multicast sessions, the number of participants n is relatively fixed. To reduce latency at the cost of reducing the number of participants is not desired. This leaves only experimental space with the RTCP bandwidth fraction rtcp_bw and the average RTCP packet size avg_rtcp_size. As mentioned, approaches aim to reduce the report interval by increasing the RTCP bandwidth fraction, but they modify the rule of the RTCP bandwidth fraction being at maximum 5% of the total available session bandwidth. Also those approaches may encounter compatibility problems.

In view of the above discussions, it the only possibility to improve, that means to reduce the report interval of the RTCP protocol is to reduce the average RTCP packet size avg_rtcp_size. As the RTCP report interval T is directly proportional to the average RTCP packet size, compressing RTCP packets can reduce the packet size to a level up to 10% of the original RTCP packets. This will result in a smaller average packet size of control protocol packets and therefore in a much smaller report interval T.

Based on this, the present invention provides a compression method for RTCP traffic controlling a RTP media data transmission session. The compression principles described herein can be applied to basically any kind of link using RTP for real-time and near-real-time media delivery, in either wired/fixed networks or wireless/mobile networks.

The endpoints in a data transmission according to the present invention maintain the content (state) of the compressor and decompressor. Due to the structure maintained in the context, repairing and recovering of out-of-sync context at the decompressor is possible. Further, it is possible to dynamically define packet formats and the compressor's and decompressor's context.

The compression method initialises the context of the control traffic flow by initially transmitting context parameters to the receiving endpoint. If necessary, the context is updated during the session using smaller sized packets (compressed control packets). Latter packets are used in case a partial context update is performed. It is also possible to update the context periodically using the initialisation packet. Context parameters can be categorized into static and dynamic parameters. Static context parameters are either a-priori known parameters or parameters not changing during a session. Dynamic context parameters, which are parameters changing during a session, are transmitted in newly defined packets or compressed control packets to the receiving end.

As the different possible context parameters (also comprising all fields of the standard RTCP data packets) are known, they can be advantageously categorised into static and dynamic context parameters. Based on this categorisation a header and data compression may be performed.

In order to further reduce the traffic overhead, a priori known context parameters can be omitted and have therefore not to be transmitted, though it is possible to perform compression of theses packets by using the compression and decompression mechanism described herein.

To initialise a session, at least one initialisation packet comprising these context parameters is transmitted to the receiving nodes. As the comprised parameters include static information, these information only have to be transmitted once. Therefore the total traffic volume to be transmitted can be significantly reduced. Dynamic context parameters are transmitted for example in control protocol specific packets (compressed control packets). Refresh packets allow the packet source to update context information at a receiving node. Control packets correspond mainly to those known from the standard RTCP protocol.

In contrast, compressed control packets are changed in their packet structure, such that their content's size (in bits) can be significantly reduced and new packets such as initialisation packets and refresh packets are introduced. Hence, the total average packet size of the control protocol's control packets can be significantly reduced in comparison to the standard RTCP protocol.

As the content of RTCP source description packets and RTCP bye packets is not frequently changing or does not occur often during a session, the corresponding source description packet and bye packet in the control protocol will not be compressed in the disclosed method, though it is possible to perform compression of theses packets by using the compression and decompression mechanism described herein. Both packets have a similar format as the corresponding RTCP packets.

After the context parameters are categorised, at least one initialisation packet is formed from these static context parameter and, if needed, from initialisation values for dynamic context parameters before they are transmitted. Refresh packets are formed from dynamic context parameters before the same are transmitted.

To reach a maximum level of compression, dynamic context parameters are further categorised into occasionally changing context parameters, context parameters of random character, counter-like context parameters, frequently changing context parameters and context parameters that regularly change by a fixed delta. Depending on the category of the dynamic context parameters, the parameters can be compressed by encoding to reduce their size before incorporating them into control data packets. Especially counter-like context parameters, frequently changing context parameters and context parameters that regularly change by a fixed delta can be encoded using least-significant-bit (LSB) encoding.

Employing least-significant-bit (LSB) encoding the K least significant bits of the encoded field value instead of the original field value are used, where K is a positive integer. After receiving K bits, a decompressor at the packet receiving end, which decompresses the compressed data packet, derives the original value using a previously received value as a reference.

Figure 1    shows the packet format of an initialisation packet used by the compression method to initialise a session,

Figure 2    shows the packet format of a refresh packet used by the compression method to update dynamic context parameters,

Figure 3    shows the packet format of a sender report packet used by the compression method,

Figure 4    shows the packet format of a receiver report packet used by the compression method and

Figure 5    shows the packet format of an application-defined packet used by the compression method.

To reduce the report interval T, the average packet size of the control protocol's data packets is reduced. The standard RTCP protocol, as defined in RFC 1889, uses the following packets to control a media data transmissions stream in a real-time or near real-time environment: Sender reports for transmitting and receiving static's from participants that are active senders in a media data transmission session, receiver reports for receiving static's from participants that are not active senders, source description items for describing the sending source, bye packets for indicating the end of participation of a former participant and application-defined (APP) packets for transmitting applications specific data.

In order to reduce the size of the above-mentioned data packets, the fields in the packet structure are analysed first. Generally all fields in RTCP packets can be categorised in static context parameters, that are fields expected to be constant throughout the lifetime of the packet stream (session), and dynamic context parameters, that are fields that are expected to vary in some way, for example randomly, within a limited value set or range or in some other manner.

The dynamic context parameters (the dynamic RTCP packet fields) may be further categorised as follows: Occasionally changing context parameters, context parameters of random character, counter like context parameters, frequently changing context parameters and context parameters that regularly change by a fixed delta.

The occasionally changing context parameters are those fields occasionally change but revert to their original value after a limited number of packets. Regarding context parameters and field within standard RTCP packets, those value or fields are the reception report count (RC) that indicates the number of report blocks in the packet, the source count (SC) fields that indicate the number of synchronization sources or contributing sources in a source description packet or identifying the number of synchronization sources or contribution sources in a by packet, payload type (PT) fields that identify the individual packet type, source description (SDES) items comprising information to describe packet sources properties and sub type fields in application-defined (APP) packets allowing a set of application-defined (APP) packets to be defined under one unique name.

Those occasionally changing context parameters can be transmitted initially for initialisation but there should also be a way to transmit or update those fields if they change. Therefore the suggested control protocol with compressed data packets introduces a refresh packet, which is used to transmit context parameters for update purposes. The usage and structure of the packet will be discussed further down below.

Frequently changing context parameters comprise those parameters that are normally either constant or have values deducible from some other fields but that frequently diverge from this behaviour. Therefore, there must be an effective way to update the frequently changing context parameter at the receivers or senders end. The mentioned refresh packets can be used in such a case or the respective fields are sent as they are in the newly defined control packets.

Fields that have to be frequently updated comprise the RTP time stamp, fields that are indicating the delay since the sender report received last (delay since last sender report), the time stamp of the last sender report, inter-arrival jitter fields that indicate an estimate of these statistical variance of the RTP data packet inter-arrival time and the length field of the RTCP packets.

A further category of dynamic context parameters are packets of random character. Examples for those parameters are the RTCP fraction loss in the bit map mask (BLP) of RTCP APP packet as specified by J. Ott et al. in "Extended RTP Profile for RTCP-based Feedback (RTP/AVPF)", Internet Draft, Oct. 2002. As those fields are completely random they are included as they are in all compressed packet headers.

The next category of dynamic context parameters are the counter-like context parameters. Those parameters are fields that behave like a counter with a fixed delta between the different counter values for all RTCP packets. The only requirement on the transmission encoding of those fields is that packet losses between the compressor on the senders end and the decompressor on the receivers end must be tolerable. If several of those fields exist, all those fields can also be communicated together. Such parameters can also used to interpret the values of frequently changing context parameters.

Examples for those fields are the RTP sequence number, the extended highest sequence number received field, the sender's packet count indicating the total number of RTP packets a sender has transmitted in the time frame between the beginning of the session and the generation of the packet comprising the sender's packet count, the packet sender's octet count that is indicating the total number of payload octets transmitted in RTP packets by the sender in the time frame between the beginning of the session and the generation of a packet comprising the sender's octet count and the cumulated number of packets lost, indicating the cumulated number of packets lost during transmission.

The last category of dynamic context parameters comprises those context parameters that regularly change by a fixed delta. Those fields usually increase by a fixed delta in succeeding packets. Thus, those fields are correlated with one another. In this context it is advisable to initiate the field's value using an initialisation packet and then updating the field by transmitting their increment.

An example for a context parameter that regularly changes by a fixed delta is the RTP time stamp.

Further, a third category besides the static and the dynamic context parameters can be determined. So-called well-known or a priori known fields within the standard RTCP packets may be either transmitted during initialisation or are omitted. An example for an a-priori known context parameter is the RTCP version field.

The described categorisation of context parameters can be, for example, performed by referencing tables used for packet and header compression. It would also be possible to dynamically categorise the context parameters within the suggested new RTCP compression method.

After the context parameters have been categorised, a part of the dynamic context parameter is encoded to reduce their size. In particular, counter like context parameters frequently changing context parameters and context parameters that regularly change by a fixed delta are least-significant-bit (LSB) encoded such that the original field size (in bits) may be substantially reduced.

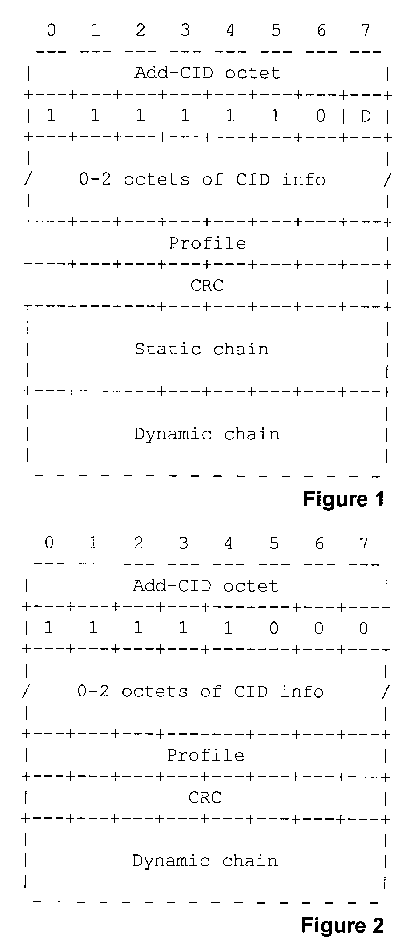

After categorising the context parameters the control protocol's packets are formed. To initialise a session an initialisation packet is formed and transmitted. The packet format of an initialisation packet is shown in figure 1. The packet contains static context parameters such as a padding flag, a synchronization source of the sender and the source, and a contributing source field in the "static chain" field of the packet. The "static chain" field is thereby variable in its length as well as the "dynamic chain" field of the packet. Also incorporated in the initialisation packet are the source count and reception report count, a payload type identification, one or more SDES items and a subtype field for application-defined (APP) packets.

The occasionally context parameters can be also integrated in the formed initialisation packet using their initial value. These initialisation values of the occasionally changing context parameters are located in the "dynamic chain" field of the initialisation packet.

Once the occasionally changing parameters are initialised, they can be updated in the following by refresh packets.

In detail the compressed initialisation packet comprises a context ID (CID, "Add-CID octet") that identifies the state of the decompressor to be used at the packet receiving end to decompress the initialisation packet at the beginning of the packet, a packet identifier ("1111110D") to enable the packet receiver to identify the packet type, profile information ("Profile") for the sender's profile, cyclic redundancy check field ("CRC") for checking data integrity of the initialisation packet, a static information chain ("Static chain") comprising static context parameters and finally dynamic information chain ("Dynamic Chain") comprising dynamic context parameters, that have to be initialised once. The latter correspond to the before-mentioned occasionally changing context parameters, such as the source count, the reception report count, the RTCP payload type, SDES items and the subtype field for application-defined (APP) packets.

Figure 2 shows the packet format of a refresh packet. As the latter mentioned fields of the initialisation packet are dynamic, the new refresh packet is introduced to update those fields. In detail the refresh packet comprises a context ID (CID, "Add-CID octet") for identifying the state of the header-decompressor to be used at the packet receiving end to decompress the refresh packet, a packet identifier ("11111000"), profile information ("Profile") of the packet sender, a cyclic redundancy check ("CRC") field for checking data integrity of the refreshing packet and a dynamic information chain ("Dynamic Chain") comprising the dynamic context parameters that have to be updated.

Additionally the initialisation packet and the refresh packet may comprise up to two additional bytes following the packet identifier in case large context identifiers (CID) are used.

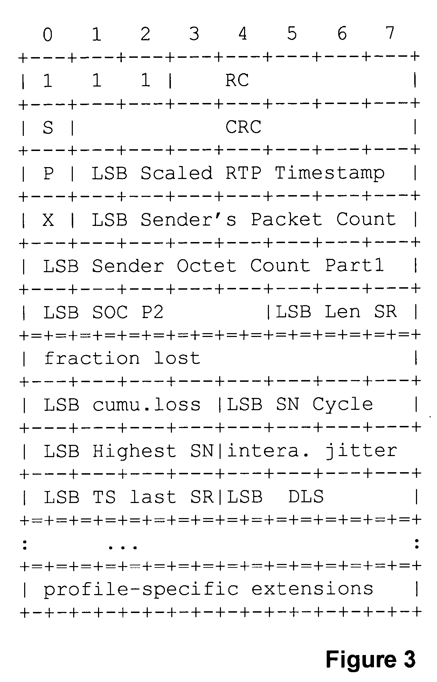

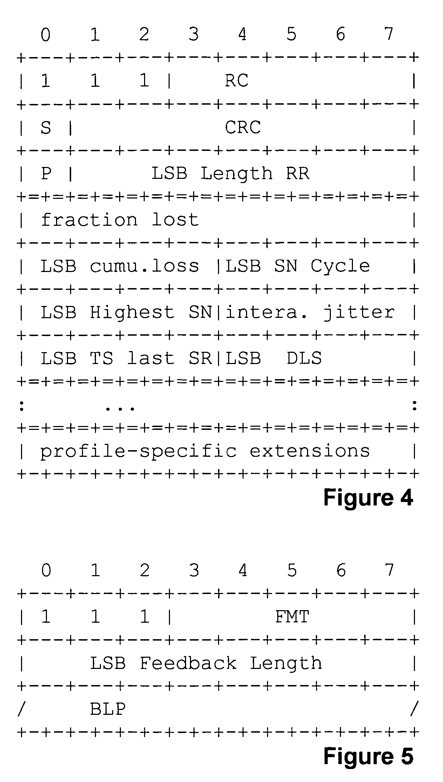

Figures 3 and 4 show a compressed version of the sender and receiver report packets and figure 5 shows a new compressed application-defined (APP) packet.

The source description packets and the bye packets correspond to the standard packet format as suggested in RFC 1889. This is because those packets occur very rarely during a session such that they are compression would not reduce the average packet size of RTCP packets significantly.

The sender report packet, as shown in figure 3, comprises a packet header and at least a report block. The report block/s can be followed by profile-specific extensions. In the profile-specific extensions all fields that fall into one of the above mentioned categories can be also compressed using least-significant-bit encoding. Hence, the extension fields' size can be also reduced leading to a smaller packet size on average.

The abbreviation "LSB" in the figures stands for "Least Significant Bit" and indicates that the respective fields are least-significant-bit encoded.

The header of the sender report packet comprises a packet identifier ("111") to identify the sender report packet type. Further, a reception report count field ("RC") is indicating the number of report blocks comprised in the compressed sender report packet. An active sender flag ("s") indicates whether participant that forms the report block is an active sender or not. The cyclic redundancy check ("CRC") field is used to check data integrity of the compressed sender report packet. A padding flag or bit ("P") is indicating whether the sender report packet contains an additional padding field at the end of the packet. The additional padding field is not a part of the actual context parameters.

A least-significant-bit (LSB) encoded RTP time stamp ("LSB Scaled RTP Timestamp") is further comprised in the header. An extension flag ("X") is indicating whether the packet comprises profile-specific extensions in a special extension field at the end of the packet.

To further reduce the sender report packet size, the sender's packet count field is also least-significant-bit (LSB) encoded. The sender's packet count field ("LSB Sender's Packet Count") in the header of the sender report packet indicates the total number of RTP packets the sender has transmitted in the time frame between the beginning of the media data transmission session and the generation of the respective sender report packet.

Further, the header of the sender report packet comprises a field for the sender octet count indicating the total number of payload octets transmitted in RTP data packets by the sender in the time frame between the beginning of the session and the generation of the sender report packet. Again, the field is least-significant-bit (LSB) encoded to reduce the size of the packet header. In the figure, this field is split into two parts ("LSB sender Octet Count Part1" and "LSB SOC P2"), the $5^{th}$ byte of the packet and the five first bits of the $6^{th}$ byte of the packet contain the sender's octet count.

The packet header further comprises a field for indicating the sender report's length ("LSB Len SR"). This field is also least-significant-bit (LSB) encoded. The end of the header is marked by the "+=+=+=" line after the $6^{th}$ byte of the packet.

The at least one report block, in the sender report packet comprises the following fields:

A fraction lost field ("fraction lost") that indicates the number of packets lost divided by the number of packet accepted to be received, a cumulated loss field ("cummu. loss") indicates the cumulated number of packets lost during transmission. To reduce size, the cumulated loss field is least-significant-bit (LSB) encoded as the remaining fields of the report block. A sequence number cycle field ("LSB SN Cycle") is indicating the sequence number cycle of the extended highest sequence number of received packets. The highest sequence number field ("LSB Highest SN") indicates the highest sequence number received by the sender of the sender report packet. The inter-arrival jitter field ("intera. jitter") comprises an estimation value of the statistical variance of the RTP data packet inter-arrival time. Further included in the report block is an RTP time stamp field ("LSB TS last SR") indicating the time since the last sender report has been sent. A field ("LSB DLS") for indicating the delay since the last compressed RTCP sender report is also included.

All fields in the report block except the fraction lost field, are encoded using least-significant-bit (LSB) encoding.

A single report block is four bytes long (bytes seven to ten shown in the figure). As indicated in the figure, multiple report blocks may be comprised by a single sender report.

Besides the sender report packet, a compressed version of the RTCP receiver report packet is suggested in the following. The receiver report packet, as shown in figure 4, comprises a header (bytes one to three) and at least one report block, which is similar to the report block described before. The compressed receiver report packet as well as the compressed sender report packet may also comprise profile-specific extensions at their end, indicated by an extension flag ("x") in the packet header.

The header of the receiver report packet comprises a packet identifier ("111") to identify the receiver report packet type thus that the receiving end may recognize the compressed version of the receiver report. A reception count field ("RC") indicates the number of report block comprised in the receiver report packet. As the sender report packet, a receiver report packet may comprise several report blocks following the respective packet header.

An active sender indication flag ("S") indicates the status of the session participant who generated the respective report block. Further, a cyclic redundancy check field is included to verify data integrity. A padding flag ("P") is indicating whether the receiver report packet contains an additional padding field at the end of the receiver report packet. The additional padding field is not part of the actual context parameters. Lastly, a length field ("LSB Length RR") is included in the header of the receiver report packet to indicate the lengths of the compressed RTCP receiver report in least-significant-bit (LSB) encoded format.

Finally, an application-defined (APP) packet format is shown in figure 5. The user of the suggested compressed application-defined (APP) packet format only applies in case the enhanced RTCP feedback as suggested by Ott et al. is used. Therefore, the packet specification is rather application-specific - as its name indicates - than a general approach.

The compressed application-defined (APP) packet format comprises a packet identifier ("111") for identifying the compressed application-defined (APP) packet type. A feedback type field ("FMT") is indicating the feedback type provided in this packet. Further, the length of the packet is indicated in the feedback length field ("LSB Feedback Length"). This field is least-significant-bit (LSB) encoded. A bitmask field ("BLP") is indicated last packets. The first bit is the BLP field (bitmask field) allows reporting loss to any of the RTP packet immediately following an RTP packet indicated by a packet identifier. In case the feedback type field (FMT) is indicating a generic acknowledgement, the first bit of the BLP field is (the so-called R bit) is 1. In this case the BLP field is used to identify the number of additional packets that are acknowledged by the compressed application-defined (APP) packet. Otherwise, if R = 0 the BLP field carries a bitmask indicating lost packets.

In summary, the above suggested compressed control packets as well as the two newly introduced packet formats (initialisation packet and refresh packet) are intended to reduce the overall average packet size of control protocol's packets, allowing to reduce the report interval T.

On one hand, the data volume is reduced by sending static context parameters in the initialisation packets "in advance" as well as to initialise occasionally changing context parameters. In order to be able to update an occasionally changing context parameter in case it is changing, the refresh packets are used to do so. On the other hand, most of the control packet fields are encoded, such that their size is further reduced.

Thus, it is possible to reduce the average size of the compressed control data packets in comparison to the standard RTCP protocol. Hence, with the suggested packet formats it is possible to significantly reduce the report interval T, without extending the allocated bandwidth for control traffic. Consequently, by being able to provide feedback in shorter time intervals, the participants of a media data transmission session can adapt to changing transmission environments faster than in sessions using the standard RTP/RTCP protocol combination. Hence, the overall quality of the transmitted (or broadcasted) application data, such as MPEG-4 encoded video data, can be significantly improved.

The suggested header and data compression mechanisms deal only with the RTCP header and data part and not the lower layer UDP/IP headers. Therefore, compared to header compression scheme like suggested in RPF 3095, which is generally applicable to the last hop or first hop point-to-point link, the approach described herein can be applied end-to-end. The intermediate hops along the way to a packet's do not need to care about the compressed control packets, as they see them either as Layer-3 IP packet data or as Layer-4 transport layer packet data. No additional overhead for the intermediate hosts will be introduced. However, if used together with Robust Header Compression for lower layers' headers in first/last hop wireless links, even more bandwidth can be saved.

**Claims**

1. A method for the compression of a control traffic in media data transmission, which uses Real-time Transport Protocol (RTP) and Real-time Control Protocol (RTCP), employed particularly in real-time or near-real-time multimedia data delivery in an Internet protocol (IP) network, within the allocated fractions of the available session bandwidth, wherein the method comprises the steps of:

   initialising the context of control traffic flow by initially transmitting context parameters and

   updating said context during the session if necessary using compressed control packets.

2. The method according to claim 1, wherein the context parameters are categorised into static context parameters and dynamic context parameters.

3. The method according to one of claims 1 to 2, further comprising the step of omitting a-priori known context parameters.

4. The method according to one of claims 1 to 3, wherein said static context parameters are transmitted in at least one initialisation packet.

5. The method according to one of claims 1 to 4, wherein the dynamic context parameters are transmitted in initialisation, refresh packets or compressed control packets.

6. The method according to claim 5, wherein dynamic context parameters are further transmitted in source description (SDES) packets and BYE packets.

7. The method according to claim 5 or 6, wherein the method is employed for compressed control data transmission between a compressor and a decompressor, said method further comprising the step of:

   defining the packet format of said initialisation packets, said refresh packets and said compressed control packets and compressor and decompressor context parameters before the step of initialising.

8. The method according to claim 7, wherein the method further comprises the step of repairing and recovering out-of-sync context at said decompressor, if necessary.

9. The method according to one of claims 2 to 8, wherein in said initialisation step transmits initialisation values for said dynamic context parameters as references.

10. The method according to one of claims 2 to 9, further comprising the step of forming at least one initialisation packet from said static context parameters before transmitting them.

11. The method according to one of claims 2 to 10, further comprising the step of forming refresh packets and compressed control packets from said dynamic context parameters before transmitting them.

12. The method of claim 11, wherein the step of forming refresh packets and compressed control packets further forms source description packets and bye packets.

13. The method according to one of claims 2 to 12, further comprising the step of categorising said dynamic context parameters into occasionally changing context parameters, context parameters of random character, counter-like context parameters, frequently changing context parameters and context parameters that regularly change by a fixed delta.

14. The method of claim 13, further comprising the step of encoding said counter-like context parameters, said frequently changing context parameters and said context parameters that regularly change by a fixed delta using least-significant-bit (LSB) encoding.

15. The method according to one of claims 12 to 14, wherein the step of forming refresh packets and compressed control packets integrates said occasionally changing context parameters and said context parameters of random character in an un-encoded form into said formed packets and said counter-like context parameters, said frequently changing context parameters and said context parameters that regularly change by a fixed delta in an encoded form into said packets.

16. The method according to one of claims 3 to 14, wherein said a-priori known context parameters comprise a control protocol version.

17. The method according to one of claims 2 to 16, wherein said static context parameters comprise:

   padding flags for indicating whether the sender report packet contains an additional padding field at the end of the sender report packet being no part of the context parameters,

   at least one synchronisation source (SSRC) identifier for identifying a packet-sender or a source of the media data transmission and

   at least one contributing source (CSRC) identifier, identifying the at least one source that adds content to a data packet.

18. The method according to one of claims 13 to 17, wherein said occasionally changing context parameters comprise the following fields of a packet:

   reception report count (RC) fields for indicating the number of report blocks in the packet,

   source count (SC) fields for indicating the number of synchronisation sources (SSRC) or contributing sources (CSRC) in a source description (SDES) packet or identifying the number of synchronisation sources (SSRC) or contributing sources (CSRC) in a bye packet,

   payload type (PT) fields identifying a packet type,

   source description (SDES) items comprising information to describe packet-source's properties and

   subtype fields in application-defined (APP) packets allowing a set of application-defined (APP) packets to be defined under one unique name.

19. The method according to claim 18, wherein said source description (SDES) items comprise:

   canonical end-point identifier (CNAME) items to describe a user and domain name of a source,

   user name (NAME) items to describe a common name of a source,

   electronic email address (EMAIL) items to describe the email address of a source,

   phone number (PHONE) items to describe a phone number of a source,

   geographic user location (LOC) items to describe the geographic location of a source,

   application or tool name (TOOL) items to describe a name of the source application producing the media data,

   notice or status (NOTE) items for transient messages describing the status of a source and

private extension (PRIV) items to define experimental or application specific extensions.

20. The method according to one of claims 13 to 19, wherein said context parameters of random character comprise:

fraction lost fields for indicating the of number of packets lost divided by the number of packets excepted to be received and

fields (BLP) comprising a bitmask of lost packets.

21. The method according to one of claims 13 to 20, wherein said frequently changing context parameters comprise:

Real-time Transport Protocol (RTP) Timestamp field for indicating the delay since the last sender report received,

timestamp fields of the last sender report,

inter-arrival jitter fields for indicating an estimate of the statistical variance of the real-time protocol (RTP) data packet inter-arrival time and

length fields indicating the length of a packet.

22. The method according to one of claims 13 to 21, wherein said counter-like context parameters comprise:

real-time protocol (RTP) sequence numbers,

fields indicating the extended highest sequence number of received packets,

a packet-sender's packet count for indicating the total number of real-time protocol (RTP) packets a sender has transmitted in the time frame between the beginning of the session and the generation of the packet comprising the sender's packet count,

a packet-sender's octet count for indicating the total number of payload octets transmitted in real-time protocol (RTP) packets by the sender in the time frame between the beginning of the session and the generation of a packet comprising the sender's octet count and

fields for indicating the cumulated number of packets lost during transmission.

23. The method according to one of claims 11 to 22, wherein said compressed control packets can be sender report packets, receiver report packets and application-defined (APP) packets.

24. The method of claim 10 or 11, wherein said step of forming initialisation packets forms initialisation packets comprising:

a context identifier that identifies the state of the header decompressor to be used to decompress the packet,

a packet identifier to enable the packet receiver to identify the packet type,

profile information comprising the packet-sender's profile information,

a cyclic redundancy check (CRC) field for checking data integrity of the updating packet,

a static information chain comprising static context parameters and

a dynamic information chain comprising dynamic context parameters.

25. The method of claim 11, wherein said step of forming refresh packets and compressed control packets forms refresh packets comprising:

a context identifier that identifies the state of the header decompressor to be used to decompress the packet,

a packet identifier, to enable the packet receiver to identify the packet type,

profile information comprising the packet-sender's profile information,

a cyclic redundancy check (CRC) field, for checking data integrity of the updating packet and

a dynamic information chain, comprising dynamic context parameters.

26. The method of claim 11, wherein said step of forming refresh packets and compressed control packets forms sender report packets comprising a sender report packet header and at least one report block.

27. The method according to claim 26, wherein said sender report packet header comprises:

a packet identifier to identify the sender report packet type,

a reception report count field for indicating the number of report blocks comprised in the sender report packet,

an active sender flag for indicating whether a session participant who generates the report block is active or not,

a cyclic redundancy check (CRC) field, for checking data integrity of the sender report packet,

a padding flag for indicating whether the sender report packet contains an additional padding field at the end of the sender report packet being no part of the context parameters,

a least-significant-bit (LSB) encoded real-time protocol (RTP) timestamp,

an extension flag for indicating that the sender report packet further comprises an extension field,

a least-significant-bit (LSB) encoded sender's packet count field indicating the total number of real-time protocol (RTP) packets the sender has transmitted in the time frame between the beginning of the session and the generation of the sender report packet,

a least-significant-bit (LSB) encoded sender's octet count field indicating the total number of payload octets transmitted in real-time protocol (RTP) data packets by the sender in the time frame between the beginning of the session and the generation of the sender report packet, and

a length field for indicating the length of the sender report in least-significant-bit encoded format.

28. The method according to one of claims 11 to 27, wherein said step of forming refresh packets and compressed control packets forms compressed receiver report packets comprising a receiver report packet header and at least one report block.

29. The method according to claim 27, wherein said receiver report packet header comprises:

a packet identifier to identify the compressed receiver report packet type,

a reception report count field for indicating the number of report blocks comprised in the receiver report packet,

an active sender flag for indicating whether a session participant who generates the report block is active or not,

a cyclic redundancy check (CRC) field, for checking data integrity of the receiver report packet,

a padding flag for indicating whether the compressed real-time control protocol (RTCP) receiver report packet contains an additional padding field at the end of the compressed real-time control protocol (RTCP) receiver report packet being no part of the context parameters and

a length field for indicating the length of the sender report in least-significant-bit encoded format.

30. The method according to one of claims 26 to 29, wherein said report block comprises:

a fraction lost field for indicating the of number of packets lost divided by the number of packets excepted to be received,

a least-significant-bit (LSB) encoded cumulated loss field for indicating the cumulated number of packets lost during transmission,

a least-significant-bit (LSB) encoded sequence number cycle field for indicating the sequence number cycle of the extended highest sequence number of received packets,

a least-significant-bit (LSB) encoded highest sequence number for indicating the highest sequence number received by the sender of the packet,

a least-significant-bit (LSB) encoded inter-arrival jitter field for indicating an estimate of the statistical variance of the real-time protocol (RTP) data packet inter-arrival time,

a least-significant-bit (LSB) encoded real-time protocol (RTP) timestamp and

a least-significant-bit (LSB) encoded delay since last sender report field for indicating the delay since the sender report received last.

31. The method according to one of claims 28 to 30, wherein said sender report packets and receiver re-

**EP 1 432 196 A1**

port packets further comprises a field for profile-specific extensions.

**32.** The method according to one of claims 11 to 31, wherein the step of forming refresh packets and compressed control packets forms application-defined (APP) packets comprising:

a packet identifier to identify the application-defined (APP) packet type,

a feedback type field for indicating a feedback type comprised in the application-defined (APP) packet,

a least-significant-bit (LSB) encoded feedback length field for indicating the length of the application-defined (APP) packet and

a bitmask (BLP) field for indicating lost packets.

**33.** A computer program comprising program code means for executing all steps of any one of the claims 1 to 32 when said program is run on a computer.

```
       0   1   2   3   4   5   6   7
      --- --- --- --- --- --- --- ---
     |          Add-CID octet          |
     +---+---+---+---+---+---+---+---+
     | 1   1   1   1   1   1   0 | D |
     +---+---+---+---+---+---+---+---+
     |                                 |
     /     0-2 octets of CID info     /
     |                                 |
     +---+---+---+---+---+---+---+---+
     |            Profile              |
     +---+---+---+---+---+---+---+---+
     |             CRC                 |
     +---+---+---+---+---+---+---+---+
     |                                 |
     |         Static chain            |
     |                                 |
     +---+---+---+---+---+---+---+---+
     |                                 |
     |         Dynamic chain           |
     |                                 |
     - - - - - - - - - - - - - - - -
```

**Figure 1**

```
       0   1   2   3   4   5   6   7
      --- --- --- --- --- --- --- ---
     |          Add-CID octet          |
     +---+---+---+---+---+---+---+---+
     | 1   1   1   1   1   0   0   0 |
     +---+---+---+---+---+---+---+---+
     |                                 |
     /     0-2 octets of CID info     /
     |                                 |
     +---+---+---+---+---+---+---+---+
     |            Profile              |
     +---+---+---+---+---+---+---+---+
     |             CRC                 |
     +---+---+---+---+---+---+---+---+
     |                                 |
     |         Dynamic chain           |
     |                                 |
     - - - - - - - - - - - - - - - -
```

**Figure 2**

```
     0   1   2   3   4   5   6   7
   +---+---+---+---+---+---+---+---+
   | 1   1   1 |  RC               |
   +---+---+---+---+---+---+---+---+
   | S |           CRC            |
   +---+---+---+---+---+---+---+---+
   | P | LSB Scaled RTP Timestamp |
   +---+---+---+---+---+---+---+---+
   | X | LSB Sender's Packet Count|
   +---+---+---+---+---+---+---+---+
   | LSB Sender Octet Count Part1 |
   +---+---+---+---+---+---+---+---+
   | LSB SOC P2        |LSB Len SR |
   +=+=+=+=+=+=+=+=+=+=+=+=+=+=+=+=+
   | fraction lost                |
   +---+---+---+---+---+---+---+---+
   | LSB cumu.loss |LSB SN Cycle  |
   +---+---+---+---+---+---+---+---+
   | LSB Highest SN|intera. jitter
   +---+---+---+---+---+---+---+---+
   | LSB TS last SR|LSB  DLS       |
   +=+=+=+=+=+=+=+=+=+=+=+=+=+=+=+=+
   :          ...                 :
   +=+=+=+=+=+=+=+=+=+=+=+=+=+=+=+=+
   | profile-specific extensions  |
   +-+-+-+-+-+-+-+-+-+-+-+-+-+-+-+-+
```

**Figure 3**

```
  0   1   2   3   4   5   6   7
+---+---+---+---+---+---+---+---+
| 1   1   1 |     RC            |
+---+---+---+---+---+---+---+---+
| S |               CRC         |
+---+---+---+---+---+---+---+---+
| P |         LSB Length RR     |
+=+=+=+=+=+=+=+=+=+=+=+=+=+=+=+=+
| fraction lost                 |
+---+---+---+---+---+---+---+---+
| LSB cumu.loss |LSB SN Cycle   |
+---+---+---+---+---+---+---+---+
| LSB Highest SN|intera. jitter |
+---+---+---+---+---+---+---+---+
| LSB TS last SR|LSB  DLS        |
+=+=+=+=+=+=+=+=+=+=+=+=+=+=+=+=+
:        ...                    :
+=+=+=+=+=+=+=+=+=+=+=+=+=+=+=+=+
| profile-specific extensions   |
+-+-+-+-+-+-+-+-+-+-+-+-+-+-+-+-+
```

**Figure 4**

```
  0   1   2   3   4   5   6   7
+---+---+---+---+---+---+---+---+
| 1   1   1 |       FMT         |
+---+---+---+---+---+---+---+---+
|      LSB Feedback Length      |
+---+---+---+---+---+---+---+---+
/      BLP                     /
+-+-+-+-+-+-+-+-+-+-+-+-+-+-+-+-+
```

**Figure 5**

**European Patent Office**

**EUROPEAN SEARCH REPORT**

Application Number

EP 02 02 8632

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | BORMANN C ET AL: "Request for Comments 3095, Robust header compression (ROHC), framework and four profiles: RTP, UDP, ESP and uncompressed" NETWORK WORKING GROUP REQUEST FOR COMMENTS, July 2001 (2001-07), pages 1-168, XP002220600 * page 21, paragraph 4.3 - page 27, paragraph 4.5.1 * * page 41, paragraph 5.2. - page 49, paragraph 5.2.4. * * page 96, paragraph 5.7.7. - page 99, paragraph 5.7.7.2 * * page 137, paragraph 6.3.1. - page 161, paragraph A.2 * | 1-5, 7-11, 13-16, 24,25,33 | H04L29/06 |
| Y | | 6,12, 17-23, 26-32 | |
| | --- | | |
| Y | SCHULZRINNE H ET AL.: "RTP: A transport protocol for Real-Time Applications, draft-ietf-avt-rtp-new-11.txt" IETF INTERNET DRAFT, [Online] 20 November 2001 (2001-11-20), pages 1-103, XP002239850 Retrieved from the Internet: <URL:www.ietf.org> [retrieved on 2003-04-30] * page 17, paragraph 6. - page 26, paragraph 6.2. * * page 33, paragraph 6.4.1. - page 51, paragraph 6.7. * | 6,12, 17-23, 26-32 | TECHNICAL FIELDS SEARCHED (Int.Cl.7) H04L |
| A | | 1-5, 7-11, 13-16, 24,25,33 | |
| | --- | | |
| | -/-- | | |

The present search report has been drawn up for all claims

| Place of search | Date of completion of the search | Examiner |
|---|---|---|
| MUNICH | 13 May 2003 | Günther, S |

EP 1 432 196 A1

## EUROPEAN SEARCH REPORT

**European Patent Office**

**Application Number**

EP 02 02 8632

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PRICE R, ET AL.: "Robust SCTP/IP Compression Using EPIC" IETF INTERNET DRAFT, [Online] 23 February 2001 (2001-02-23), pages 1-10, XP002240542 Retrieved from the Internet: <URL:www.globecom.net/ietf> [retrieved on 2003-05-08] * page 2, paragraph 1. - page 7, paragraph 3.1. * | 1-33 | |
| A | WO 02 29991 A (PROVISIONPOINT COMMUNICATIONS) 11 April 2002 (2002-04-11) * abstract * * page 1, line 5 - page 7, line 35; figures 4A,4B,7D,7E,7F,8A,8B * | 1-33 | |
| A | EP 1 187 417 A (MATSUSHITA ELECTRIC IND CO LTD) 13 March 2002 (2002-03-13) * abstract * * column 1, line 1 - column 5, line 1; figures 1,3,4B * | 1-33 | TECHNICAL FIELDS SEARCHED (Int.Cl.7) |
| A | EP 1 204 258 A (MATSUSHITA ELECTRIC IND CO LTD) 8 May 2002 (2002-05-08) * abstract * * column 1, line 5 - column 7, line 35 * | 1-33 | |

The present search report has been drawn up for all claims

| Place of search | Date of completion of the search | Examiner |
|---|---|---|
| MUNICH | 13 May 2003 | Günther, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 02 02 8632

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2003

| Patent document cited in search report | | Publication date | Patent family member(s) | | Publication date |
|---|---|---|---|---|---|
| WO 0229991 | A | 11-04-2002 | AU<br>WO | 9658601 A<br>0229991 A1 | 15-04-2002<br>11-04-2002 |
| EP 1187417 | A | 13-03-2002 | EP<br>CA<br>CN<br>JP<br>US | 1187417 A1<br>2353263 A1<br>1343056 A<br>2002124989 A<br>2002027882 A1 | 13-03-2002<br>07-03-2002<br>03-04-2002<br>26-04-2002<br>07-03-2002 |
| EP 1204258 | A | 08-05-2002 | CA<br>EP<br>JP<br>US | 2361255 A1<br>1204258 A2<br>2002204260 A<br>2002064224 A1 | 06-05-2002<br>08-05-2002<br>19-07-2002<br>30-05-2002 |

EPO FORM P0459

For more details about this annex : see Official Journal of the European Patent Office, No. 12/82